# EUROPÄISCHE PATENTSCHRIFT

(11) **EP 1 045 576 B1**
(45) Veröffentlichungstag und Bekanntmachung des Hinweises auf die Patenterteilung: **06.09.2006**
(21) Anmeldenummer: 00107172.9
(22) Anmeldetag: 11.04.2000
(51) Int. Cl.: H04N 1/60

(54) **Verfahren zur Herstellung einer Vorlage für die Kalibrierung digitaler Bildeingabegeräte**
Method for producing a target for calibrating digital image readers
Procédé pour la production d'une cible de calibration destinée à un lecteur numérique d'images

(30) Priorität: 12.04.1999 DE 19916314
(43) Veröffentlichungstag der Anmeldung: 18.10.2000
(73) Patentinhaber: Beisch, Clemens, 86825 Bad Wörrishofen (DE); Steib, Stefan, 80333 München (DE)
(72) Erfinder: Beisch, Clemens, 86825 Bad Wörrishofen (DE); Steib, Stefan, 80333 München (DE)
(74) Vertreter: Molnia, David

(56) Entgegenhaltungen:
- EP-A- 0 674 429
- WO-A-00/44164
- WO-A-98/10585
- WO-A-99/10835
- US-A- 5 416 613
- MCCAMY C.S.; MARCUS H.; DAVIDSON J.G.: 'A COLOR-RENDITION CHART' JOURNAL OF APPLIED PHOTOGRAPHIC ENGINEERING Bd. 2, Nr. 3, 1976, Seiten 95 - 99, XP000600952
- HUNG P.C.: 'COLORIMETRIC CALIBRATION FOR SCANNERS AND MEDIA' PROCEEDINGS OF THE SPIE Bd. 1448, 1991, BELLINGHAM, VA, USA, Seiten 164 - 174, XP000858675

## Beschreibung

Die Erfindung betrifft ein Verfahren und eine Vorlage zur Kalibrierung digitaler Eingabegeräte, insbesondere zur Eingabekalibrierung von Scannern und Digitalkameras.

Wenn mittels eines Scanners oder einer Digitalkamera ein Bild erfaßt wird, entsteht ein Datensatz mit den Informationen über das Bild, insbesondere auch mit Farbinformationen. Damit jedoch nach dem Erfassungsvorgang die richtigen Farben des Bildes im Datensatz enthalten sind, ist es notwendig solche Eingabegeräte zu kalibrieren, um einen Abgleich zwischen den z.B. vom Scanner ermittelten Farbwerten und den tatsächlich auf dem Bild vorhandenen zu schaffen.

Solche Kalibrierungen erfolgen über Vorlagen, die auch Kalibrierungstargets genannt werden und meist ein Bild mit Farbübergängen sowie Schwarz-Weiß-Verläufe aufweisen. Gemäß dem Stand der Technik werden Kalibrierungstargets zur Verfügung gestellt, die photographisch belichtet sind und damit Farben aus dem RGB-Farbraum aufweisen. Es sind Verläufe anhand von aneinandergrenzenden, meist rechteckigen oder quadratischen Farbfeldern vorhanden, bei denen jeder einzelne Farbton des RGB-Farbraumes (Farbmischung aus den Grundfarben Rot, Grün und Blau) nur einmal vorkommt. Dabei entstehen eine große Vielzahl an Farbfeldern, von denen sich in den einzelnen Verläufen benachbarte jeweils nur leicht in der Helligkeit, im Farbton und der Sättigung unterscheiden.

Bei Scannerkalibrierungen wird dann beispielsweise nach dem Einscannen des Kalibrierungstargets und der damit verbundenen Datensatzerstellung mit Hilfe einer im Kalibrierungspaket mitgelieferten Software ein Abgleich vorgenommen (bei dem auch manuelle Schritte notwendig sind), damit die tatsächlichen Farbwerte im weiteren Betrieb richtig zugeordnet werden können. Solche Kalibrierungsverfahren und Targets gemäß dem Stand der Technik haben wesentliche Nachteile. Zunächst einmal sind die Kalibrierungspakete, die auf dem Markt erhältlich sind, sehr teuer. Außerdem weist diese Kalibrierungsmethode grundsätzliche Fehler auf, welche Ungenauigkeiten mit sich bringt.

So erzeugt die große Vielzahl der RGB-Farbfelder einen äußerst großen digitalen Datensatz, dessen Informationen bei der Kalibrierung durch zusätzliche Umrechnungen in Zwischenfarbräume (z.B. LAB) beschnitten werden, so daß ein Datenverlust eintritt und eigentlich im wesentlichen geradlinig verlaufende Farbverlaufskurven stark verzerrt werden. Es entsteht ein sogenanntes systemisches Rauschen, das die Qualität der Kalibrierung stark verschlechtert.

Ein weiterer Nachteil solcher herkömmlicher Kalibrierungen besteht darin, daß bei einem nur einmaligen Vorkommen jedes Farbwertes auf dem Target Belichtungs- oder Beleuchtungsschwankungen über das zu erfassende Feld nicht abgeglichen werden können.

D1 offenbart ein Verfahren zur Kalibrierung eines Scanners, bei dem in Betracht gezogen wird, die Kalibrierungsvorlage mit einem bestimmten Zieldrucker zu erstellen, soweit der Scanner für den Zieldrucker kalibriert werden soll.

Es ist die Aufgabe der vorliegenden Erfindung, ein Verfahren und eine Vorlage zur Kalibrierung digitaler Eingabegeräte bereitzustellen, welche die genannten Nachteile des Standes der Technik überwinden. Insbesondere soll die Genauigkeit der Kalibrierung verbessert und eine preiswerte Eingabekalibrierung für Eingabegeräte wie Scanner oder Digitalkameras zur Verfügung gestellt werden.

Diese Aufgabe wird bei einem erfindungsgemäßen Verfahren, gemäss Anspruch 1 dadurch gelöst, daß Farbfelder durch ein Subtraktives Mehrfarben-Druckverfahren mit einem frequenzmodulierten Druckraster in einer Großserien herstellung gedruckt werden.

Die Erfindung unterscheidet sich also einerseits grundsätzlich dadurch vom Stand der Technik, daß auf dem Kalibrierungsbild keine RGB-basierten Farben, sondern solche verwendet werden, die druckbar sind, also durch Drucktechniken aufgebracht werden. Dies sind bei einer bevorzugten Ausführungsform der Erfindung Farben aus dem CMYK (Cyan/Magenta/Yellow/Schwarz) -Farbraum.

Die notwendigen Referenzdaten liegen gemäß ICC-Standard im CIE-Lab und XYZ-Farbraum vor und wurden so gewählt, daß sie nur den druckbaren CMYK-Farben entsprechen. Hierdurch ist es erstmals möglich korrigierte Daten für alle praxisrelevanten Farbräume (RGB, LAB und CMYK) zu erstellen, ohne einen der genannten Farbräume zu beschneiden.

Durch CMYK-Druckfarben kann eine genaue Prozeßsteuerung bei der Herstellung der Kalibrierungsvorlagen (Targets) gewährleistet werden. Wenn die Farben des Targets im frequenzmodulierten Druckraster gedruckt und mit CPC-gesteuerten Druckmaschinen neuester Generation hergestellt werden, ist eine Großserienherstellung genauester Targets möglich. Diese Targets weisen genormte und richtige Farben auf, welche insbesondere durch Näherung der visuellen und drucktechnischen Werte eine Skala (Euroskala nach Fogra BVD-Vorgaben) mit Farbwertentsprechungen für ein Standard-Druckraster (60er-Druckraster) simulieren.

Bei einer vorteilhaften Ausführungsform des erfindungsgemäßen Verfahrens wird ein Kalibrierungsbild hergestellt, das lediglich die wichtigsten Gamutfarben des CMYK-Farbraumes aufweist. Dies trägt dazu bei, den Farbwertebereich einzugrenzen, und der so reduzierte Datensatz minimiert das bei der Verwendung von RGB-Targets mit einer sehr hohen Anzahl verschiedener Farbfelder (sehr großer Datensatz; Beschneidung bei den Umrechnungen) entstehende systemische Rauschen. Fehlende Farbwerte können rechnerisch ermittelt werden. Die erzeugten ICC-Profile werden deutlich homogener und stimmiger; sie entsprechen ohne weiteres datentechnisch dem Industriestandard.

Es kann ein Kalibrierungsbild hergestellt werden, das durch Offsetdruck, insbesondere Bogen- oder Rollenoffsetdruck, Tiefdruck oder Siebdruck erstellt worden ist.

Erfindungsgemäß wird weiterhin mit Vorteil ein Kalibrierungsbild hergestellt, das eine mehrfache, insbesondere zehnfache Wiederholung gleicher Farbfelder an verschiedenen Stellen aufweist, wobei die Meßwerte dieser Farbfelder im Abgleichungsdatensatz gemittelt werden. Die gleichen Felder sind dabei in einem regelmäßigen Schema auf dem Bild verteilt, was erstmals die Möglichkeit gibt, Belichtungsschwankungen bei Digitalkameraaufnahmen oder Beleuchtungsschwankungen bei Scannererfassungen, welche die Meßwerte verfälschen könnten, dadurch auszugleichen, daß eine Mittelwertbildung erfolgt. Einen besonderen Vorteil verschafft hier der eingeschränkte Farbwertebereich auf dem Kalibrierungsbild, da hierdurch natürlich Platz zur Verfügung gestellt wird, um gleiche Farbfelder mehrmals aufzudrucken. Diese Methode wird RCC-Methode (Repetitive/Reductive Color Control) genannt.

Die Erfindung betrifft ferner die Herstellung einer Vorlage zur Kalibrierung digitaler Eingabegeräte, insbesondere Scanner und Digitalkameras, mit einer Anordnung verschiedener Farben, die dadurch gekennzeichnet ist, daß die Farben lediglich genormte, durch Druck erzeugbare Farben und insbesondere Farben aus dem CMYK-Farbraum sind. Die Farben können bevorzugt lediglich die wichtigsten Gamutfarben des CMYK-Farbraumes umfassen und gemäß einer vorteilhaften Ausführungsform in einer mehrfachen, insbesondere zehnfachen Wiederholung gleicher Farbfelder an verschiedenen Stellen der Vorlage erscheinen, wobei insbesondere eine gleichmäßige Verteilung der gleichen Farbfelder über der Vorlagenfläche herrscht. Es besteht die Möglichkeit die Farben im frequenzmodulierten Druckraster aufzudrucken.

Die Erfindung wird im weiteren anhand einer Ausführungsform einer erfindungsgemäßen Kalibriervorlage (im weiteren auch "Target") näher erläutert.

In den Zeichnungen zeigen:
- Fig. 1: ein leeres Target, an dem ein Koordinatensystem angelegt wurde;
- Fig. 2: eine Tabelle I, mit Prozentwertangaben der Farben Cyan, Magenta, Yellow (Gelb) und K (Schwarz) in einem fertigen Target im Farbenfeld;
- Fig. 3: eine Tabelle II mit Prozentwertangaben für die Graustufen im Graustufenfeld
- Fig. 4 bis 6: Farbauszüge für die Prozessfarben Cyan, Magenta, Gelb (Yellow) und Schwarz (K) für ein erfindungsgemäßes Target im Farbenfeld und in den Graustufen.

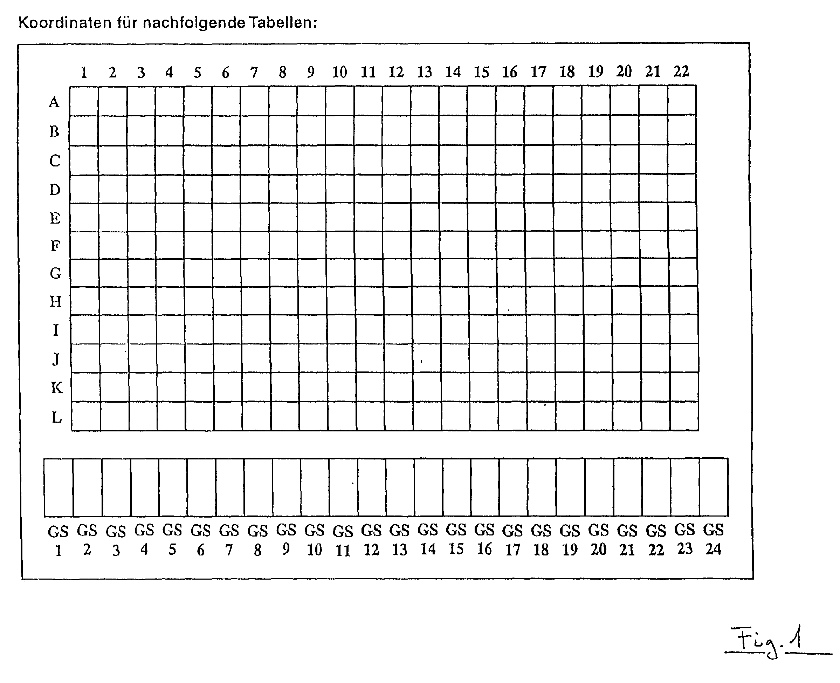

Mit den beiliegenden Figuren wird die Farbverteilung auf einem erfindungsgemäßen Kalibrierungstarget in Schwarz-Weiß-Darstellung erläutert. In Fig. 1 ist ein leeres Kalibrierungstarget dargestellt, das zur eindeutigen Bezeichnung seiner Einzelfelder mit einem Koordinatensystem versehen wurde. Das Target weist ein Farbfeld (A1 bis L22) und Graustufen (GS1 bis GS24) auf.

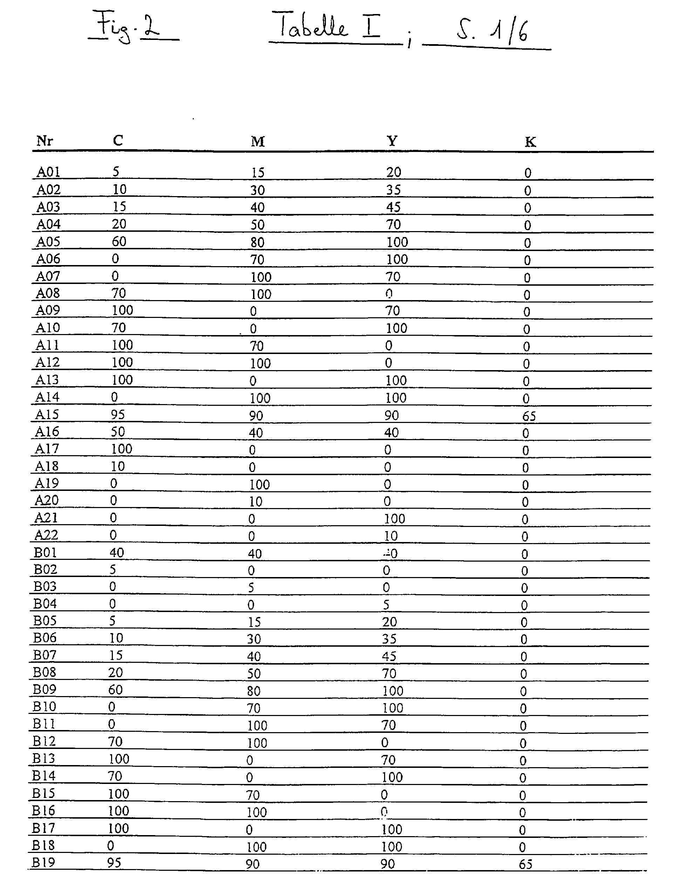

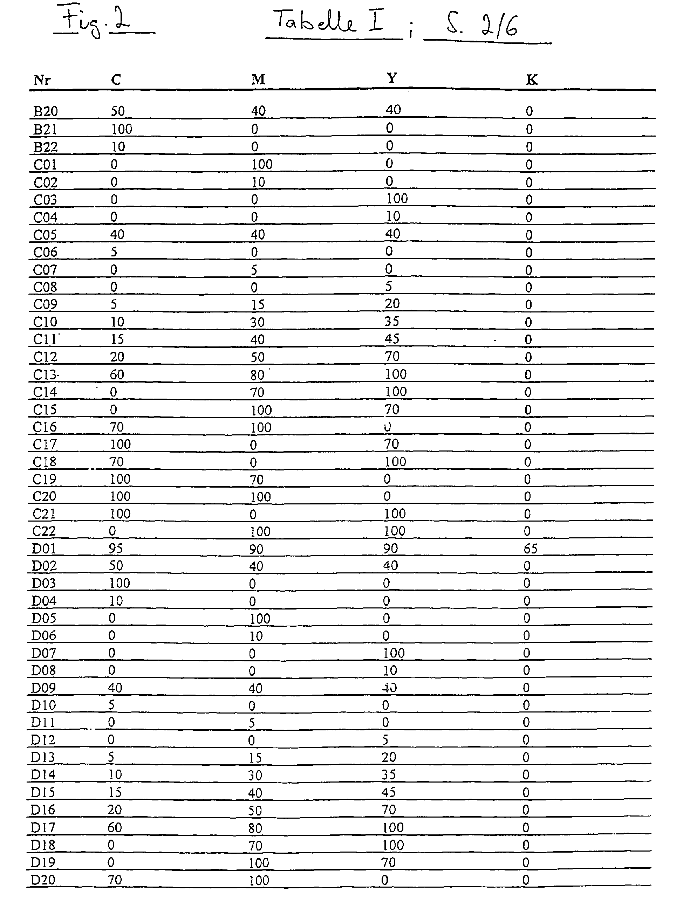

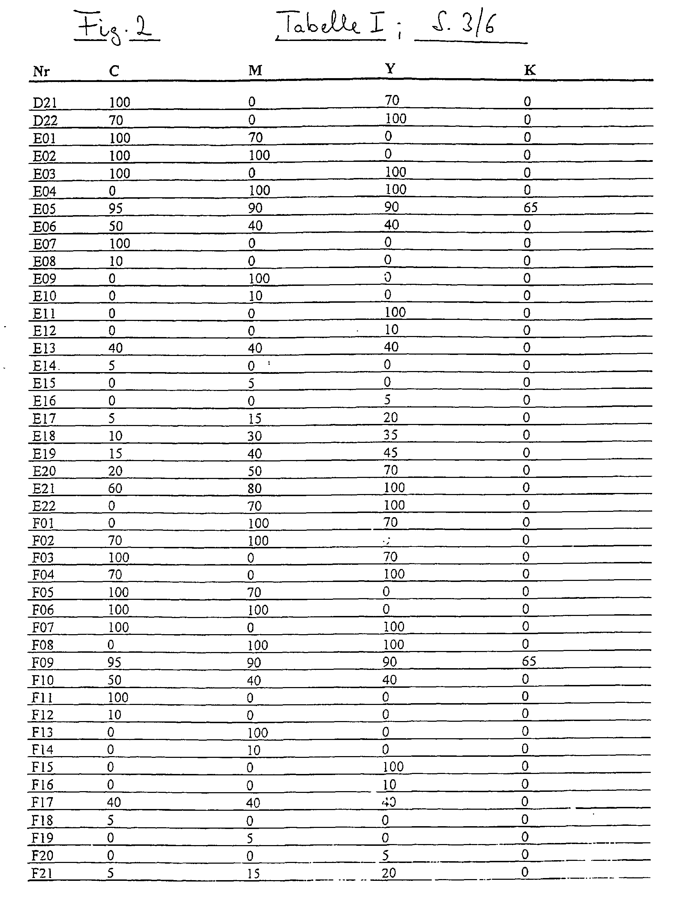

Die Farben in den einzelnen Feldern lassen sich über die Prozentwertangaben für die Farben Cyan, Magenta, Yellow (Gelb) und Schwarz (K) definieren, wie sie in Fig. 2 (Tabelle I) für das Farbfeld und in Fig. 3 (Tabelle II) für die Graustufen angegeben sind. Je nach prozentualem Anteil der obigen Komponenten entsteht eine Farbe für jedes Einzelfarbfeld.

Hierdurch wird erstmals ein Target nach ANSI-Norm statt als 3-farbiges RGB-Target als 4-farbiges CMYK-Target aufgebaut. Das Target enthält 264 Einzelfarbfelder mit je 26 Farben und 19 Grauwerten von Weiß bis Schwarz. Von den 26 Farben werden die Haupttöne elf mal und die restlichen Farben zehnmal wiederholt. Bei den Grauwerten werden das 3%-Feld sowie das 100%-Feld je dreimal wiederholt.

Der Aufbau der Meßfelder entspricht dem ANSI (American National Standard for Graphic Arts and Photography) -Standard IT 8.7/2 zur Erstellung von Eingabeprofilen für reflektive Vorlagen. Die verwendeten CMYK Farben entsprechen "in sich selbst" per definitionem dem Gamut des zu erreichenden Zielfarbraumes, da dieser wiederum vorrangig CMYK ist. Als sekundäre Ableitung kann aber ohne Verlust an Farbinformation auch ein 3- Kanal- Farbraum wie L*A*B* oder RGB ausgegeben werden (z.B. über Profilkonvertierung in einer ICC-fähigen Standardsoftware oder auch OPI Systemen oder RIP Software).

Dies bedeutet, daß das erfindungsgemäße Target von allen standardisierten Tools zur Erstellung von ICC Profilen ausgelesen werden kann, und zwar völlig unabhängig vom Hersteller oder dem verwendeten CMM (Color Matching Module).

Die Kalibrierung und meßtechnische Erfassung ist optimiert auf einen Illuminanten von D50 wobei die Ausgabe und Druckkontrolle des Targets bei D65 erfolgt. Durch CMYK-Druckfarben kann eine genauere Prozesssteuerung bei der Herstellung der Targets gewährleistet werden.

Durch zehn- bzw. elffache Wiederholung der Farbfelder auf dem Target (verteilt nach einem regelmäßigen Schema) werden eventuelle Belichtungs- oder Beleuchtungsschwankungen, die die Meßwerte verfälschen könnten, durch Mittelung wesentlich genauer verrechnet (RCC = Repetitive/Reduktive Color Control). Durch die Eingrenzung des Farbwertebereiches auf die wichtigsten Gamutfarben des CMYK Farbraumes wird die durch den Bildsensor (Scanner oder Digitalkamera) erzeugte Datenmenge ohne Verlust oder Beschneidung der Ausgangsdaten übersetzt. Die notwendigen Referenzdaten liegen gemäß ICC-Standard im CIE-Lab und XYZ-Farbraum vor und wurden so gewählt, daß sie nur den druckbaren CMYK-Farben entsprechen. Hierdurch ist es erstmals möglich korrigierte Daten für alle praxisrelevanten Farbräume (RGB, LAB und CMYK) zu erstellen, ohne einen der genannten Farbräume zu beschneiden. Dadurch wird ein Gamut-Mapping auf ein absolutes Minimum beschränkt.

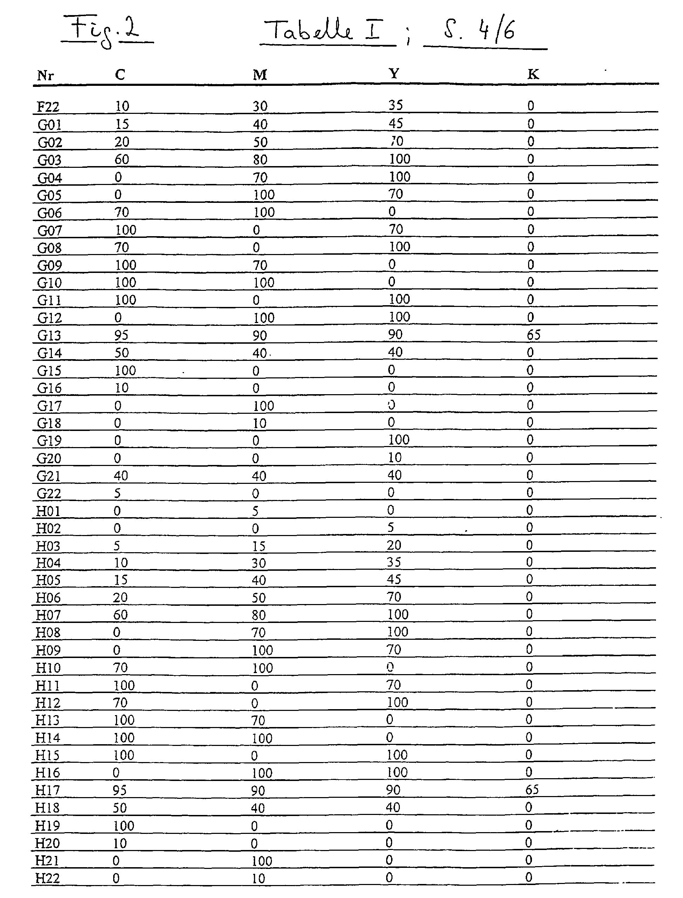

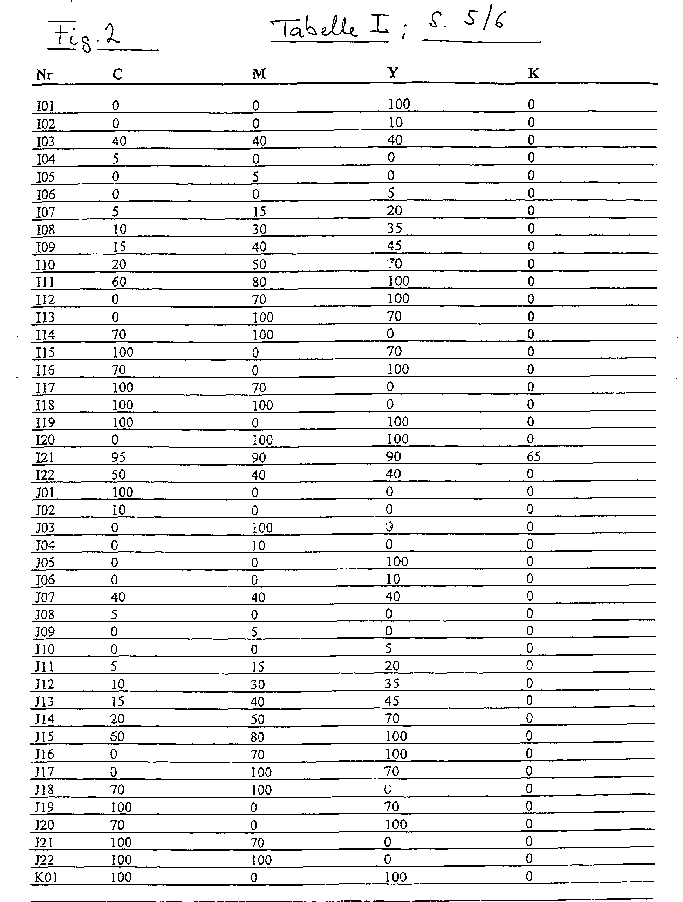

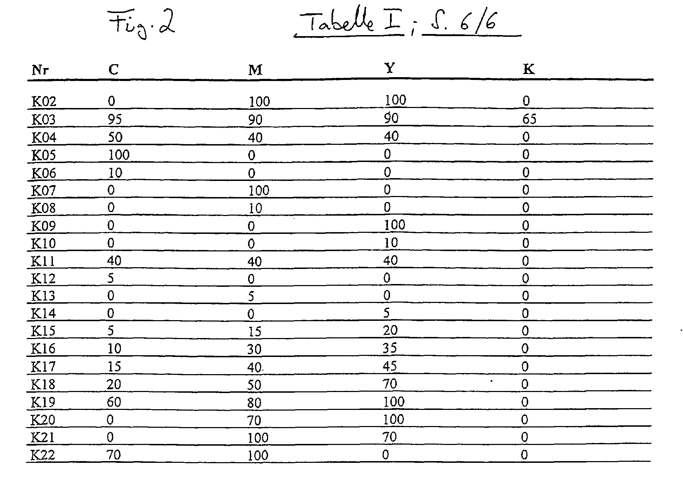

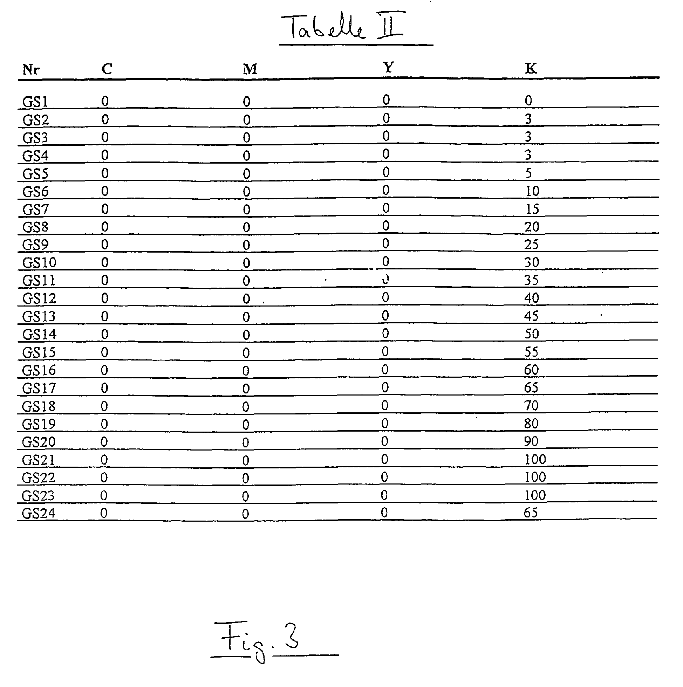

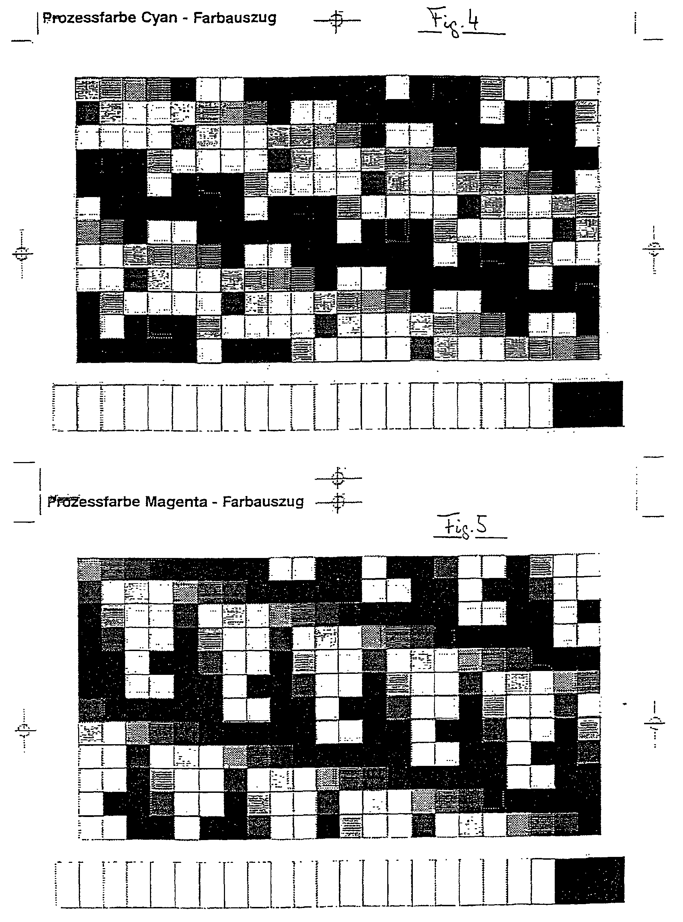

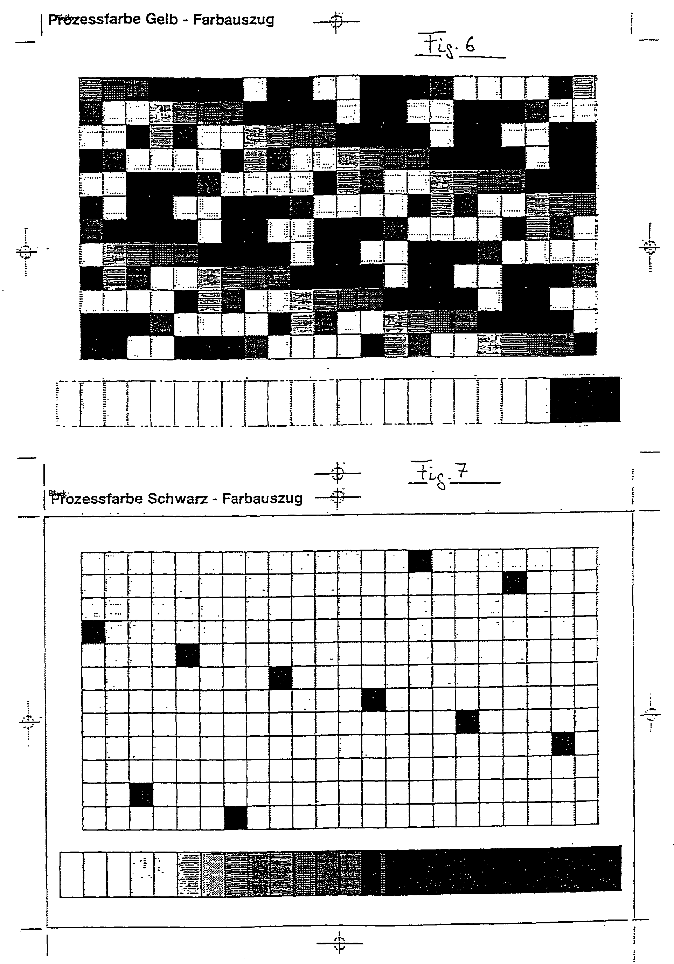

In den Fig. 4 bis 6 sind nunmehr für die einzelnen Prozessfarben (Fig. 4: Cyan; Fig. 5: Magenta; Fig. 6: Gelb (Yellow); Fig. 7: Schwarz (K)) eines erfindungsgemäßen Targets Farbauszüge dargestellt. Wenn in einem Einzelfeld bei einer Prozessfarbe eine völlig weiße Fläche zu sehen ist, bedeutet dies, daß von dieser Farbe im jeweiligen Farbton 0% vorhanden sind. Völlig schwarze Felder deuten an, daß 100% dieser Prozessfarbe vorhanden sind; Zwischenwerte deuten auf jeweils entsprechende Farbmischung hin (z.B. 50% Grau entspricht 50% der jeweiligen Prozessfarbe).

## Patentansprüche

1. Verfahren zur Herstellung einer Kalibrierungsvorlage für die Kalibrierung digitaler Eingabegeräte, **dadurch gekennzeichnet, dass** auf der Kalibrierungsvorlage Farbfelder durch ein subtraktives Mehrfarben-Druckverfahren mit einem frequenzmodulierten Druckraster in einer Großserienherstellung gedruckt werden.

2. Verfahren nach Anspruch 1, wobei die Druckfarben des subtraktiven Mehrfarben-Druckverfahrens die Elementarfarben Cyan, Magenta, Yellow und Schwarz (CMYK) sind.

3. Verfahren nach einem der Ansprüche 1 oder 2, wobei das subtraktive Mehrfarben-Druckverfahren ein Offsetdruckverfahren, insbesondere ein Bogen- oder Rollenoffsetdruckverfahren, ein Tiefdruckverfahren oder ein Siebdruckverfahren ist.

4. Verfahren nach einem der vorangegangenen Ansprüche, wobei die Farbfelder in einer mehrfachen, insbesondere zehnfachen Wiederholung gleicher Farben an verschiedenen Stellen der Vorlage angeordnet sind, wobei insbesondere eine gleichmäßige Verteilung der gleichen Farbfelder über die Vorlagenfläche herrscht.

## Claims

1. Method for producing a calibration target for calibration of digital input devices,
**characterized in that**
colored fields are printed on the calibration target by a subtractive multicolor printing process by means of frequency modulated screening in a large series production.

2. Method according to claim 1, wherein the printing colors of the subtractive multicolor printing process are the base colors cyan, magenta, yellow, and black (CMYK).

3. Method according to one of claims 1 or 2, wherein the subtractive multicolor printing process is an offset printing process, in particular a sheet fed or a rotary offset printing process, a gravure printing process, or a screen printing process.

4. Method according to one of the preceding claims, wherein the colored fields are arranged in a multiple, in particular ten-fold repetition of equal colors at different positions of the target, wherein there is in particular an even distribution of the same colored fields over the area of the target.

## Revendications

1. Procédé pour la fabrication d'un modèle de calibrage pour le calibrage d'unités d'entrée numériques, **caractérisé en ce que** des zones de couleurs sont imprimées sur le modèle de calibrage au moyen d'un procédé d'impression polychrome soustractif avec une trame d'impression à fréquence modulée dans une fabrication en grandes séries.

2. Procédé selon la revendication 1, dans lequel les couleurs d'impression du procédé d'impression polychrome soustractif sont les couleurs élémentaires cyan, magenta, jaune et noir (CMJN).

3. Procédé selon l'une quelconque des revendications 1 ou 2, dans lequel le procédé d'impression polychrome soustractif est une impression offset, notamment une impression offset à feuilles ou à bobines, une impression en creux ou une sérigraphie.

4. Procédé selon l'une quelconque des revendications précédentes, dans lequel les zones de couleurs sont agencées à différents endroits du modèle selon plusieurs répétitions des mêmes couleurs, notamment dix répétitions, sachant qu'en particulier une répartition régulière des mêmes zones de couleurs prédomine sur la surface du modèle.
